Europäisches Patentamt

European Patent Office

Office européen des brevets

(19)

(11) Veröffentlichungsnummer: **0 004 330**

**B1**

(12)　**EUROPÄISCHE PATENTSCHRIFT**

(21) Anmeldenummer: **79100730.5**

(22) Anmeldetag: **12.03.79**

(51) Int. Cl.³: **G 11 B 23/46,**
**G 01 B 11/04, G 03 B 31/02**

(54) **Verfahren und Vorrichtung zur berührungslosen kontinuierlichen Messung und Überwachung von Magnetspuren auf bewegten Filmbändern.**

(30) Priorität: **22.03.78 DE 2812633**

(43) Veröffentlichungstag der Anmeldung:
**03.10.79 Patentblatt 79/20**

(45) Bekanntmachung des Hinweises auf die Patenterteilung:
**11.02.81 Patentblatt 81/6**

(84) Benannte Vertragsstaaten:
**BE CH DE FR GB IT**

(56) Entgegenhaltungen:
**DE - A - 1 573 494**
**DE - A - 2 103 876**
**DE - A - 2 146 947**
**FR - A - 2 305 710**

(73) Patentinhaber: **AGFA-GEVAERT Aktiengesellschaft**
**Patentabteilung**
**D-5090 Leverkusen 1 (DE)**

(72) Erfinder: **Pöhler, Friedmar**
**Am Hermannshof 7**
**D-5060 Bergisch Gladbach 2 (DE)**
(72) Erfinder: **Falk, Hans**
**Carlo-Mierendorff-Strasse 8**
**D-5090 Leverkusen (DE)**
(72) Erfinder: **Müller, Josef**
**Hardt 9**
**D-5066 Overath-Marialinden (DE)**
(72) Erfinder: **Klein, Hans Joachim, Dr.**
**Hindenburgstrasse 83**
**D-5600 Wuppertal (DE)**
(72) Erfinder: **Hoffacker, Franz, Dipl.-Ing.**
**Schumannweg 11**
**D-4018 Langenfeld (DE)**

Courier Press, Leamington Spa, England.

## Verfahren und Vorrichtung zur berührungslosen kontinuierlichen Messung und Überwachung von Magnetspuren auf bewegten Filmbändern

Die Erfindung betrifft ein Verfahren und eine Vorrichtung zur berührungslosen und kontinuierlichen Messung und Überwachung der Breite, Dicke und Lage von Magnetspuren auf bewegten Filmbändern.

Zur Herstellung von vertonten fotografischen Filmen werden die Filmbänder mit Tonspuren, insbesondere Magnettonspuren versehen. Diese Magnetspuren werden unter anderem zur bildsynchronen Aufnahme und Wiedergabe von Sprache, Musik oder von Steuersignalen benötigt. Ein derartiges Filmband für fotografische und akustische Aufnahme und Wiedergabe wird meist mit 2 Magnetspuren versehen, wobei die erste meist breitere Spur zur Aufnahme des Tones und die zweite oft schmalere Spur als Dickenausgleichsspur dazu benutzt wird, daß beim Aufwickeln des Filmbandes dieses eben liegt und nicht vom Wickel abrutscht. Neuerdings wird diese Ausgleichsspur zusätzlich auch zur Aufnahme eines Signales zur Steuerung oder aber als zweite Tonspur bei Stereoaufnahmen verwendet.

Diese Spuren wurden früher auf Kinefilm und 16 mm-Schmalfilme aufgebracht. Später wurden auch 8 mm Schmalfilme und heute werden Super 8-Schmalfilme mit Tonspuren versehen.

Die Herstellung solcher Magnetspuren erfolgt nach verschiedenen Verfahren. Durch Aufkleben oder Heißsiegelung auf Filmmaterial aufgebrachte Magnetspuren neigen vor allem beim Naßprozess der Filmentwicklung zum "Abschwimmen" der Magnetspuren. Diese Verfahren werden daher vorzugsweise zur nachträglichen Magnetbespurung fertig entwickelter Filme eingesetzt. Die Aufbringung und Kontrolle der in diesem Falle bei Tageslicht durchführbaren Bespurung von Magnetspurmaterial, das bezüglich Geometrie und elektromagnetischer Eigenschaften bereits vorgeprüft ist, ist dabei relativ einfach.

Bei Filmen, die unmittelbar bei der Bildaufnahme synchron vertont werden und den Naßprozeß noch durchlaufen müssen, lassen sich sehr viel haltbarere Magnetspuren durch Gießen auf die Rückseite des bereits lichtempfindlichen, noch unbelichteten Filmes erzeugen. Der Bespurungsvorgang und die in diesem Falle umfangreichere Kontrolle der geometrischen und elektromagnetischen Eigenschaften der Magnetspuren müssen daher im Dunkelraum durchgeführt werden. Hinzu kommt, daß Fehler bei der Bespurung des Filmes das bereits hoch veredelte, ansonsten einwandfreie Filmprodukt wertlos machen würden.

Bei der Magneton-Bespurung z.B. von Super-8-Film im Dunkelraum können verschiedene Geometriefehler und/oder Fehler der magnetischen Eigenschaften der Tonspur irreparabel entstehen, wobei bereits einer der unten genannten Fehler zur Unverkäuflichkeit des an sich einwandfreien Film-Materials führen kann. Es ist daher eine—nicht nur sporadische—Kontrolle der Spur-Geometrie und der magnetischen Spureigenschaften bereits während der Bespurung erforderlich.

In der Spur-Geometrie und deren mechanischer Güte sind Fehler möglich bezüglich

A 1) der Breite
   2) der Dicke
   3) der Lage zum Rand
   4) des Querschnittprofils
   5) der Oberflächengüte
   6) der Haftfestigkeit und des Abriebs
   7) der Kalandrierung oder Richtmagnetisierung (indirekte Fehler)

In den elektromagnetischen Eigenschaften sind Fehler möglich bezüglich

B 1) der Empfindlichkeit
   2) des Frequenzganges
   3) der Vollaussteuerbarkeit
   4) des Rauschspannungsabstandes
   5) des Modulationsrauschens
   6) der Löschdämpfung
   7) drop out und drop in

Nahezu alle unter A genannten Fehler beeinflussen auch die elektromagnetische Güte der Magnetspur, insbesondere korrespondieren Fehler unter

A 1, A 2 mit Fehlern unter B 1 (B 3) und
A 4, A 5 mit Fehlern unter B 2 B5 und (B 7)

Die unter B genannten Fehler können für sich allein oder als Folge nicht typgemäßen Magnetspurmaterials auftreten. Zusätzliche Fehler oder Fehler nach A) oder B) können auch als Folge des späteren Entwicklungsprozesses entstehen, dier hier aber nicht berücksichtigt werden.

Ideal, aber unrentabel wäre zweifellos die Kontrolle möglichst aller unter A) und B) genannten möglichen Fehler bereits während der Magneton-Bespurung auch im Hindblick auf eine einfache Fehler-Ursachenerkennung.

Es ist bekannt, stichprobenweise z.B. am Anfang oder Ende einer Produktions-Charge Filmstücke zu entnehmen und diese zu prüfen. Bei diesem diskontinuierlichen Verfahren können aber hohe Verluste entstehen, da bei den hohen Gießgeschwindigkeiten von der Entnahme der Probe bis zu dem Meßergebnis erhebliche Zeit vergeht in der Filmband beschichtet wird, das bei aufgetretenem Fehler unbrauchbar sein würde. Auch ist diese bekannte Prüfung sehr ungenau und unsicher.

Dieser Sachverhalt macht aus wirtschaftlichen Gründen eine kontinuierliche Überwachung, z.B. der für Super-8-Film nach DIN 15 881, Blatt 2 festgelegten Geometrie und Lage der Magnetspuren bereits während des Bespurungsvorganges erforderlich.

Eine Kontrolle der Tonspur mit in Berührung arbeitenden Meßköpfen könnte nur im vollständig getrocknetem Zustand der Spuren erfolgen, um diese nicht zu beschädigen.

Unter Berücksichtung der mit den Pigmenteigenschaften verbundenen hohen Schleifwirkung der Magnetspur würden sich in Berührung messende Aufnehmer bei den heute üblichen hohen Gießgeschwindigkeiten sehr schnell abnutzen, daher dürften ausschließlich berührungslos arbeitende Meßmethoden praktikabel sein.

Da die Geometrie der Magnetspuren auch deren elektromagnetischen Eigenschaften beeinflussen, erfordert die Aufgabe eine anwendungsspezifische Lösung, dies heißt die Messung der Lage und Breite der Magnetspuren sollte auf optischer Meßbasis, die Messung der Spurdicke über das magnetisch wirksame Spurvolumen auf magnetischer Meßbasis erfolgen. Auf diese Weise wird mit einem Minimum an Aufwand eine optimale Kontrolle erreicht.

Der Erfindung liegt die technische Aufgabe zugrunde, ein Verfahren und eine Vorrichtung zu schaffen, die es ermöglicht, die Breite, Dicke und Lage von Magnetspuren auf bewegten Filmbändern, berührungslos kontinuierlich und im wesentlichen geschwindigkeitsunabhängig im Dunklen zu messen, zu registrieren und anzuzeigen, so daß im Falle von Gießfehlern entweder die Gießmaschine gestoppt oder die Gießeinrichtung automatisch so gesteuert und geregelt wird, daß eine optimale Bespurung mit einem Minimum an Ausschuß erreicht wird.

Erfindungsgemäß wurde die Aufgabe dadurch gelöst, daß nacheinander optisch die Spurbreite und -lage der Magnetspuren und elektromagnetisch der gesamte magnetisch wirksame Spurquerschnitt gemessen, die Meßwerte ausgewertet, digital angezeigt, synchron zum Maschinenlauf registriert und je nach Art und Größe der festgestellten Abweichungen zum Nachregeln einer Gießvorrichtung, zum Abgeben von Warnsignalen oder zum Stoppen einer Beschichtungsmaschine benutzt werden.

In einer besonderen Ausführungsform einer Vorrichtung zum Durchführen dieses Verfahrens ist zwischen einem Objektiv und einer Diodenkamera eine Prismenanordnung angebracht, die die zu messenden Magnetspuren auf dem Target der Diodenkamera direkt nebeneinander abbildet, und der Vergrößerungsmaßstab des Objektives ist so gewählt, daß das Bild der Magnetspuren bei der die größtmögliche Breitenausdehnung des Bildes bewirkenden Abweichung der Magnetspuren von ihrem Sollwert das Target der Diodenkamera ausfüllt.

Besonders vorteilhaft erfolgt für unbelichteten Film die Ausleuchtung der Magnetspuren mit Infrarotlicht, wobei die Lichtquelle aus einer Halbleiterdiode besteht, die im Brennpunkt eines Parabolspiegels angeordnet ist und die gesamte Strahlung über eine Sammellinse auf einen Lichtleiter fokussiert ist, der das gebündelte Infrarotlicht der Diode über einen Querschnittswandler gleichmäßig auf die Spuren verteilt.

Es wurde gefunden, daß zur Einhaltung der engen Toleranzen zweckmäßigerweise ein Grenzwertgeber eingesetzt wird, der synchron mit jedem Scan der Diodenkamera einstellbare, den Normgrenzen entsprechende Grenzwertsignale erzeugt und die Signale der Flanken der Magnetspuren mit diesen Grenzwertsignalen laufend vergleicht und durch eine Auswertelektronik festgestellt wird, ob und welche der Spuren zu breit oder zu schmal sind, ob eine oder mehrere Spuren fehlen oder ob die Spuren gegenüber den Filmbahnrändern verschoben sind. Mit der erfindungsgemäßen Vorrichtung und dem Verfahren gelingt es optisch die Breite und Lage der Magnetspuren mit einer weit besseren Genauigkeit als es die Einhaltung der Norm erfordert zu erfassen, zu registrieren und zu regeln. Auch die Dicke oder das Volumen der Magnetspuren kann mit dem beschriebenen Verfahren mit ausreichender Genauigkeit erfaßt und gemeinsam mit den optischen Werten ausgewertet werden. Das Verfahren arbeitet berührungslos, kontinuierlich und von der Geschwindigkeit des Filmbandes unabhängig und arbeitet auch bei Dunkelheit, wie das für unbelichtete fotografische Filme erforderlich ist.

Überraschenderweise zeigte die Vorrichtung und das Verfahren, daß sich die Meßgrößen aus den optischen und magnetischen Messungen erstaunlich gut zur Steuerung und Regelung der Gießeinrichtung benutzen lassen, wobei über die Auswerteeinrichtung die aufbereiteten Daten einem Regler zugeführt werden, der die Lage der Spuren zum Filmrand durch Verschieben des Gießers in seitlicher Richtung, die Dicke der Spuren durch Veränderung des Abstandes zwischen Gießer und Filmband und die Breite der Spuren durch Druckregelung im Gießer beeinflußt.

Mit dieser Vorrichtung ist so eine gleichmäßige und optimale Magnetspurqualität bezüglich der Spurbreite und -lage und der Spurdicke bei einem Minimum an Verlusten des teuren Farbfilmmaterials möglich.

Für die Auswertung der Ergebnisse der kontinuierlichen Messung sind eine Reihe von Möglichkeiten geschaffen, so kann beim Fehlen einer Spur sofort Alarm gegeben oder die Maschine automatisch abgeschaltet werden. Auftretende Fehler werden digital angezeigt und auf einem synchron mit dem Filmband laufenden Schreiber aufgezeichnet, so daß diese dann in einem späteren Arbeitsgang leicht gefunden und eliminiert werden können, wobei gegebenenfalls nur die fehlerhaften kleinen Stücke aus dem Filmband herausgeschnitten werden müssen.

Vorteile der Magnetspurquerschnittsmessung ergeben sich aus der Wechsel-Sättigungsmagnetisierung des Magnetspurmaterials mittels einer Magnetisierspule, die über einen Triac mit Halbwellen wechselnder Polarität aus dem 50 Hz-Netz erregt wird und einer Meßspule, die aus Gründen der Entkopplung zur Magnetisierspule vorzugsweise in möglichst großem Abstand senkrecht und mittensymmetrisch zur Magnetisierspule angeordnet ist, wobei eine vorzeichenunababhängige Integration des von der Meßspule empfangenen Signals und eine Mitteilung über mehrere Magnetisierungszyklen erfolgt.

Die elektrische Speisung der Magnetisierspule erfolgt intermittierend mit sinusförmigen Halbwellen. Der Strom zur Speisung wird mittels eines Triac's nahe dem Netzspannungs-Nulldurchgang eingeschaltet und nahe dem Strom-Nulldurchgang ausgeschaltet. Hierdurch ergibt sich die für die Vorrichtung und das Verfahren wesentliche geringste Schwächung der Magnetspurmagnetisierung beim Abbau der in der Magnetisierspule gespeicherten magnetischen Energie in Verbindung mit einer vergleichsweise sehr kleinen elektromagnetischen Störfeldstärke.

Weitere Vorteile und Anwendungsmöglichkeiten sind in folgender Beschreibung in Verbindung mit beiliegenden Zeichnungen zu ersehen.

Es zeigen:

Figur 1a—c eine Aufsicht auf bespurte Filmbänder

Figur 2 eine Gesamtanordnung der optischen und elektromagnetischen Meßvorrichtung

Figur 3 eine Prismenanordnung zur optischen Spurmessung

Figur 3a den Strahlengang im mittleren Prisma in einer um 90° gedrehten Seitenansicht

Figur 4 einen Impulsplan für optische Messung

Figur 5 einen Impulsplan für magnetische Messung.

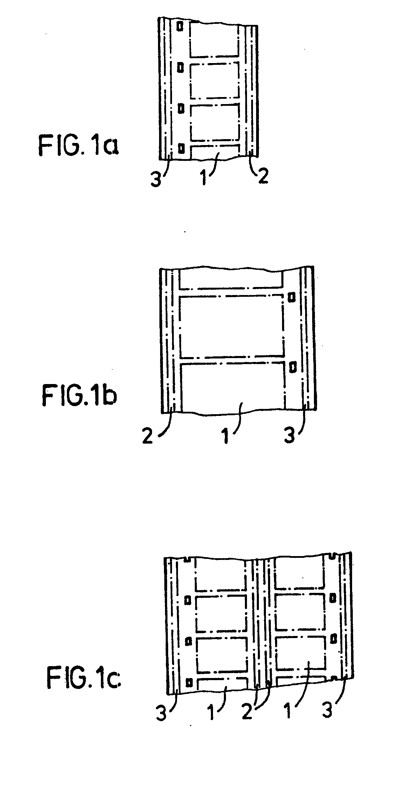

Die Figur 1 a zeigt ein 8 mm-Filmband 1 mit einer Hauptspur 2 und einer Ausgleichsspur 3. Desgleichen zeigt Figur 1 b ein 16 mm Filmband 1 mit der Hauptspur 2 und der Ausgleichsspur 3.

Die Figur 1 c zeigt das derzeit für Amateuraufnahmen meist verwendete Super 8-Filmband 1 im Doppelformat. In der Mitte befinden sich die beiden Hauptspuren 2 und an den beiden Rändern die Ausgleichsspuren 3.

Nach der Magnetbespurung wird dieses Filmband zwischen den zwei Hauptspuren 2 in zwei Single Super-8-Filme gesplittet und in Kassetten konfektioniert.

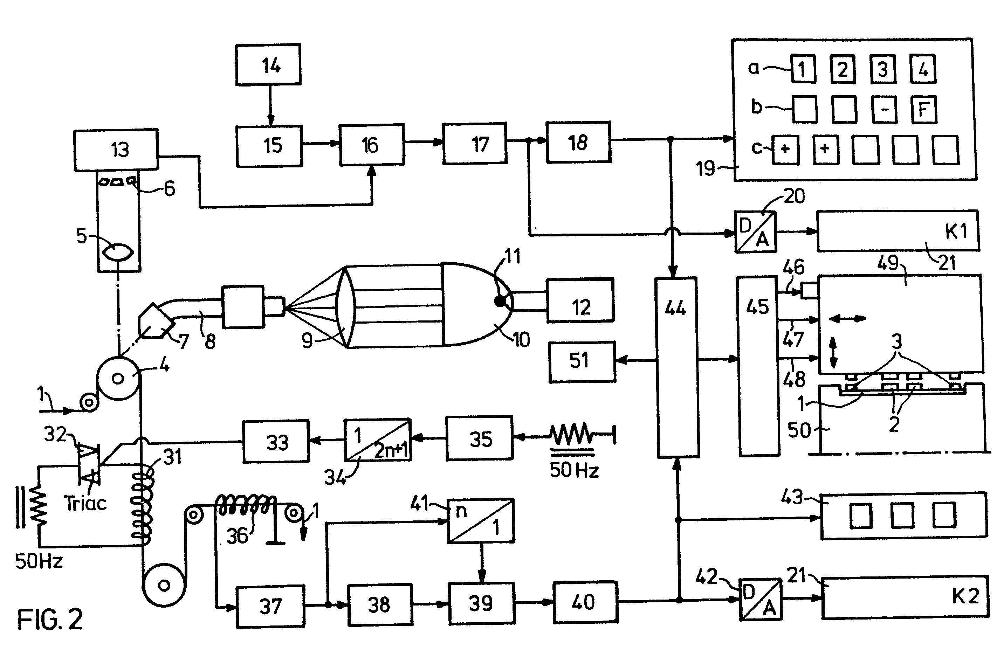

Die Figur 2 zeigt das Meßprinzip der Magnetspurgeometrie an dem Beispiel des Doppel Super-8-Filmes nach Figur 1c.

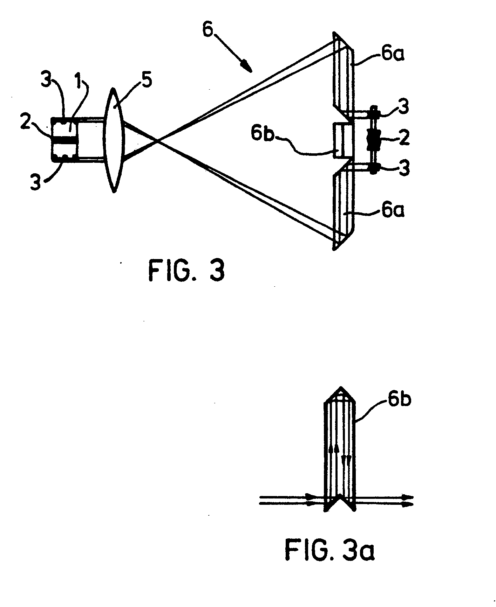

Der zu messende Film 1 wird—seitlich gut geführt—um eine Meßwalze 4 geleitet und mittels eines Objektives 5 auf das Target einer handelsüblichen 1024 Dioden Abtastkamera 13 scharf abgebildet. Würde man den Doppel Super-8-Film 1 c direkt auf dem 25,4 cm breiten Target einer 1024-Dioden-Abtastkamera 13 abbilden, so würde man eine Auflösung von theoretisch ca. 25 $\mu$ (Diode zu Diode) erhalten. Diese Auflösung reicht aber in Anbetracht der vorgegebenen engen Toleranzen nicht aus. Da der zwischen Hauptspur 2 und Ausgleichsspur 3 liegende Bildraum meßtechnisch hier nicht interessiert, kann man zwischen Objectiv 5 und Diodenkamera 13 eine spezielle Prismenanordnung nach Fig. 3 einfügen und mittels der Prismen 6 die beiden Ausgleichsspuren 3 optisch unmittelbar neben den beiden Hauptspuren 2 abbilden. Das Bild der beiden Hauptspuren 2 wird durch das Prisma 6 b (Fig. 3, 3a) geleitet, welches senkrecht zu den beiden anderen Prismen 6 a angeordnet ist und für den Lichtstrahl der Hauptspuren 2 den Lichtweg ebenso lang ausbildet, wie für die Ausgleichsspuren 3, so daß die Lichtwege aller Abbildungen gleich lang und damit eine scharfe Abbildung gleichzeitig aller vier Spuren möglich wird; außerdem sind die Prismen so beschaffen und angeordnet, daß das Bild der 4 Magnetspuren des beleuchteten Ausschnittes den Target der Diodenkamera zum gleichen Zeitpunkt erreicht. Nach einer ca. 5-fachen Vergrößerung durch das infrarotkorrigierte Objectiv 5 erhält man eine ausreichende Auflösung von theor. 5 $\mu$m (Diode zu Diode) und damit eine wesentliche technische Verbesserung des Meßverfahrens.

Der Film wird beleuchtet durch eine bei ca. 940 nm mit ca. 400 mW strahlende Galliumarsenid-Diode 11 die von einem Stromstabilen Netzteil 12 gespeist wird und in einen Parabolspiegel 10 eingebaut ist. Das aus dem Spiegel austretende parallele Strahlenbündel wird mittels einer Sammel-Linse 9, deren Brennweite auf die Apertur des nachfolgenden Lichtleiters 8 angepaßt ist, fokussiert und einem Querschnittswandler 7 zugeführt, der die 4 Spuren unter einem Winkel von ca. 50° zur Senkrechten gleichmäßig beleuchtet.

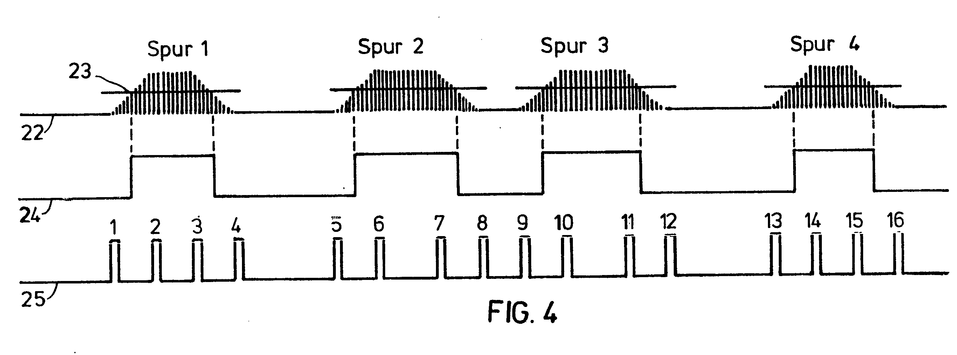

Die Dioden-Abtastkamera 13 (Fig. 2) erzeugt von den 4 Magnetspuren ein "Videosignal" 22 (Fig. 4), das unter Nutzung eines einstellbaren Triggerpegels 23 (Fig. 4) in ein "Spursignal" 24 (Fig. 4) überführt wird. Aufgabe der nachgeschalteten Meßelektronik ist die Überwachung der 8 Spurflanken auf Einhaltung definierter, in der Norm festgelegter Toleranzen.

Zu diesem Zweck wird mittels eines Grenzwertgebers 15 (Fig. 2) für jede der 8 Spurflanken eine entsprechend der Norm mittels eines Schalters 14 einstellbares unteres und oberes Grenzwertsignal 25 (also insgesamt 16 Grenzwertmarken gemäß Fig. 4) erzeugt. In einem nachgeschalteten "Vergleicher" 16 (Fig. 2) wird jede Flanke des Spur-Signals bezüglich seiner Lage zu den Grenzwert-Signalen verglichen.

Erscheint z.B. das erste Spursignal 24, Fig. 4 nach dem zweiten Grenzwertsignal ($25_2$) oder das zweite Spursignal vor dem dritten Grenzwertsignal ($25_3$), so wird Spur 1 als "zu schmal" bewertet, wenn das jeweils andere zu der Spur gehörende Spursignal 24 keine Abweichung zeigt. Entsprechendes gilt für zu breite Spuren. Im Beispiel der Figur 4 liegen alle 8 Spurflanken innerhalb der eingestellten Grenzen.

Durch eine besondere Fehler-Auswertlogik 17 wird über einen Fehlerspeicher 18 das Anzeige-Tableau 19 angesteuert. Die vier Anzeigeeinheiten 19 b werden entweder mit Symbol "—" mit der Bedeutung "Spur zu schmal" oder mit dem Symbol "F" mit der Bedeutung "Spur fehlt" und die fünf Anzeigeeinheiten 19 c werden dem Symbol "+" mit der Bedeutung "Spur zu breit" angesteuert. Die vier Anzeigeeinheiten 19 a zeigen ständig die Spur-Nummern 1, 2, 3 und 4 und dienen der Zuordnung der "—", "F" und "+" Symbole zu den vier Spuren während des Gießprozesses im Dunkelraum. Durch die Anordnung von vier "—" und fünf "+"-Anzeigen ist es ohne zusätzlichen Aufwand an Auswerteelektronik und Anzeigen möglich, eine Verschiebung der Spurlage zu der einen oder anderen Filmrandseite zu signalisieren.

Der über einen digital-analog Wandler 20 angeschlossene Schreiber 21, dessen Papiervorschub filmwegproportional erfolgt, dient der Fehlerprotokollierung.

Die Einrichtung erlaubt eine Auflösung quer zur Laufrichtung des Filmes besser als 10 $\mu$m und eine besonders von der Beleuchtungsstärke und Remissionseigenschaften der Magnetspuren, von der Empfindlichkeit des Diodentargets und dem Öffnungsverhältnis des Objektives abhängige minimale Abtastperiode für das Diodentarget von 30 Millisekunden. Bei einer Gießgeschwindigkeit von z.B. 80 m/min. entspricht dies einem Filmweg von 4 cm. Diese Daten könnten gemäß dem Verfahren noch weiter verbessert werden, etwa durch Einsatz größerer Diodenkameras mit größerer Diodenzahl, was aber bei den derzeitigen Qualitätsanforderungen nicht erforderlich ist.

Während die optische Meßeinrichtung die Lage und Breite der Spuren. bzw. deren Fehlen zu messen erlaubt, ist es durch Kombination mit dem elektromagnetischen Verfahren und der zugehörigen Vorrichtung möglich, fast gleichzeitig den Spurquerschnitt zu messen. Hiermit ist es möglich, laufend die von dem Gießer auf das Filmband aufgebrachte Menge an magnetisch wirksamen Magnetspurmaterial zu messen und zu regeln.

Nach dem Induktionsgesetz ist die magnetische Induktion

$$B = \frac{\Phi}{q} \quad \text{und} \quad \begin{array}{l} \text{mit } \Phi = \text{magnetischer Fluß} \\ q = \text{magnetischer Flußquerschnitt} \end{array}$$

und die in einer Meßspule der Windungszahl w durch das wechselmagnetisierte und bewegte material induzierte Spannung

$$U_o = -w \frac{d\Phi}{dt} = -w \frac{dB}{dt} \cdot q$$

Wird das in die Magnetisierspule eingebrachte Magnetspurmaterial bis zur Sättigung magnetisiert und geht man davon aus, daß das zum Beguß gelangende Pigment typgemäß einheitliche und konstante Eigenschaften hat, so wird man von der Konstanz des magnetisierenden Feldes weitgehend unabhängig. Um außerdem den Einfluß der Filmgeschwindigkeit zu eliminieren, wird die in der Meßspule induzierte Spannung $U_o$ über mehrere Magnetisierungszyklen vorzeichenunabhängig integriert. Damit erhält man eine Größe für die integrierte Spannung von

$$U_1 - c \cdot q ,$$

wobei: c eine Konstante und q der magnetische Flußquerschnitt ist. Hierbei ist q die einzige Variable und wird normiert zur Anzeige gebracht.

Die nach diesem Prinzip erzielte Auflösung liegt bei den durch die Norm gegebenen Spurabmessungen und einer Magnetschichtdicke von z.B. ca. 8 $\mu$m besser als 1% und ist damit weit besser als die Forderungen an die Konstanz der elektromagnetischen Eigenschaften der Magnetspuren.

Bei der hier angewandten Meßmethode wird die Summe des in der Meßspule befindlichen Magnetspurvolumens aller vier Spuren erfaßt, d.h. nicht volumenändernde Spurprofil-änderungen, sowie mögliche Querschnittäderungen der Spuren untereinander—die aber in ihrer Summe konstant bleiben—können von dieser Meßmethode nicht erfaßt werden. Wie die praktische Erfahrung zeigt, sind solche Fälle bisher noch nicht beobachtet worden.

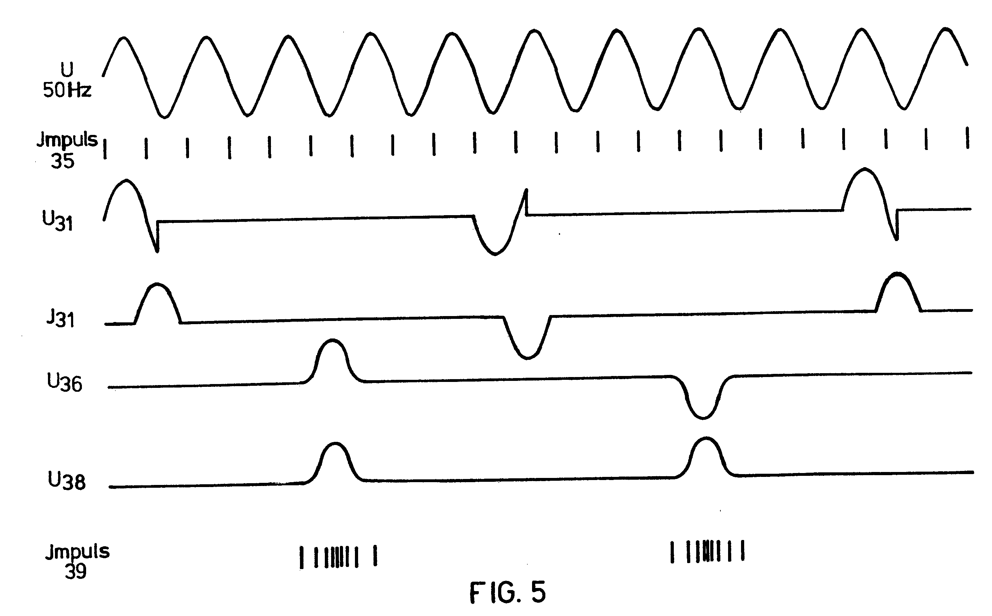

Das Prinzip der Messung ist gemäß Fig. 2 und 5 wie folgt:

Das mit Magnetpigment bespurte und laufende Filmband 1 wird durch eine Magnetisierspule 31 mit rechteckigem, dem Filmband nach Fig. 1 c angepaßten Innenquerschnitt geführt und darin intermittierend mit Halbwellen der sinusförmigen 50 Hz-Netzperiode mit wechselnder Polarität jeweils bis zur Sättigung magnetisiert. Die Länge der Spule ist so gewählt, daß von ihr ein genügend homogenes Magnetfeld erzeugt wird.

Aus dem 50 Hz-Netz wird mittels eines Null-spannungs-Impulsgebers 35 (Fig. 2) eine Folgefrequenz von 100 Hz Impulsfolge 35 (Fig. 5) jeweils im Netzspannungs-Nulldurchgang erzeugt, die über einen Frequenzteiler 34 mit einstellbar ungeradzahligem Untersetzungsverhältnis und eine Triac-Ansteuerschaltung 33 einem Triac 32 so zugeführt werden, daß der Triac nahe dem Netzspannungs-Nulldurchgang $U_{31}$ (Fig. 5) durchgeschaltet und nahe dem Strom-Nulldurchgang $J_{31}$ (Fig. 5) wieder gesperrt wird. Das Untersetzungsverhältnis des Frequenzteilers 34 ist dabei in Abhängigkeit von der Länge der Magnetisierungsspule, der Mindestgeschwindigkeit des Filmbandes, der Erwärmung der Magnetisierspule und im Hinblick auf eine gegen die Netzfrequenz kleine Magnetisierungsfrequenz so gewählt, daß das Filmband 1 zwischen den Polwechseln mindestens soweit transportiert wird, daß keine nennenswerte Schwächung der vorherigen Magnetisierung erfolgen kann.

In der gegen die Magnetisierspule wesentlich kürzeren Meßspule mit einem dem Filmband angepaßten rechteckigen Innenquerschnitt wird eine Spannung $U_{36}$ (Fig. 5) induziert, in einem Verstärker 37 verstärkt, in einem Tiefpaßfilter von möglichen Störanteilen befreit, in einer Gleichrichterschaltung 38 gleichgerichtet ($U_{38}$, Fig. 5) und über eine Anzahl n voller Perioden mittels eines digitalen Integrators 39 bestehend aus einem Spannungs-Frequenzwandler mit Zähler integriert (Impuls 39, Fig. 5). Mit einem Frequenzteiler 41 wird die Anzahl n der zu integrierenden Magnetisierungszyklen vorgegeben. Aufgabe des Frequenzteilers 41 ist es, nach Ablauf der vorgewählten Anzahl Zyklen (n/1) den Inhalt der im Integrator 39 gespeicherten Informationen in einen Meßwertspeicher 40 zu übergeben und danach den Zähler des Integrators 39 zu löschen. Das Ergebnis der Messung wird über die Meßdauer im Meßwertspeicher 40 zwischengespeichert und an der Anzeigeeinheit 43 digital zur Anzeige gebracht bzw. nach Umsetzung in einem Digital-Analog-Wandler 42 über Kanal 2 auf dem gleichen Analogschreiber 21 wie die optische Spurmessung zur Fehlerprotokollierung registriert.

Für das Verfahren und die Vorrichtung ist wesentlich, daß die mit einer Feldstärke von 80 000 A/m erregte Magnetisierspule 31 keine Störsignale in die Meßspule 36 induziert, da diese das Meßergebnis fäschen würden. Mit der Meßspule 36 verbunden und unmittelbar benachbart ist daher eine symmetrischer Verstärker hoher Gleichtaktunterdrückung der zusammen mit der Meßspule 36 in einer doppelten magnetischen Abschirmung untergebracht und senkrecht und mittensymmetrisch zur Magnetisierspule angeordnet ist.

Aus den Werten der optischen und der elektromagnetischen Messungen werden in einer Fehlerverarbeitungsschaltung 44 Signale gebildet, die kontinuierlich einen Regler 45 (Fig. 2) beaufschlagen. Der Regler 45 ist so ausgebildet, daß er auf die zwei Freiheitsgrade des Gießers 49 einwirken kann.

Zur Zentrierung des Gießers 49 symmetrisch zu den Filmbandrändern wirkt der regler 45 auf einen Antrieb 47 der den Gießer 49 seitlich verschiebt.

Zur Regelung der Spurdicke wirkt der Regler 45 über einen Antrieb 48 der den Abstand zwischen Gießer 49 und Filmband 1 einstellt und schließlich werden die Breiten der Magnetspuren durch die Regelung des Druckes 46, mit dem das Magnetspurmaterial in den Gießer 49 gebracht wird, geregelt. Da der Gießer alle 4 Spuren gleichzeitig gießt, ist eine Einzelregelung der Spuren nicht möglich, aber auch nicht erforderlich. Die Regelung ist so eingestellt, daß sie Ungleichmäßigkeiten des Magnetspurmateriales, der Filmdicke und -breite kontinuierlich ausgleicht und eine erheblich Qualitätsverbesserung durch gleichmäßige Spureneigenschaften ermöglicht.

Fehler die sich durch die Regelung nicht ausgleichen lassen (z.B. Verstopfen einer Gießdüse, Spurunterbrechungen, Verschmieren der Spuren) und solche Fehler, die die vorgewählten Grenzen pro Zeiteinheit mehrfach überschreiten, führen zu einem automatischen Maschinenstop.

## Patentansprüche

1. Verfahren zur berührungslosen und kontinuierlichen Messung und Überwachung der Breite, Dicke und Lage von Magnetspuren auf bewegten Filmbändern und zur Steuerung des Gießvorganges beim Bespuren der Filmbander, dadurch gekennzeichnet, daß nacheinander optisch die Spurbreite und -lage der Magnetspuren (2, 3) und elektromagnetisch der gesamte magnetisch wirksame Spurquerschnitt (q) gemessen, die Meßwerte ausgewertet, digital angezeigt, synchron zum Maschinenlauf registriert und je nach Art und Größe der festgestellten Abweichungen zum Nachregeln einer Gießeinrichtung, zum Abgeben von Warnsignalen oder zum Stoppen der Beschichtungsmaschine benutzt werden.

2. Vorichtung zum Ausführen des Verfahrens nach Anspruch 1, dadurch gekennzeichnet, daß eine optische Meßeinrichtung zur Messung der Spurbreiten- und -lagen vorhanden ist, die besteht aus einer Beleuchtungseinrichtung (7 bis 12), die das über eine Meßwalze (4) geführte beschichtete Filmband (1) ausleuchtet, einem Objektiv (5) zur Abbildung des beleuchteten Teiles des Filmbandes (1) auf dem Target einer Diodenkamera (13), einem einstellbaren Grenzwertgeber (15), einem die Lage der von der Diodenkamera (13) abgegebenen Impulse relativ zu den vom Grenzwertgeber (15) erzeugten Impulsen feststellenden Vergleicher (16), einer Fehlerauswertlogik (17) und einem Fehlerspeicher (18), daß zur Erfassung der Werte des magnetisch wirksamen Querschnittes eine elektromagnetische Meßeinheit vorhanden ist, die besteht aus einer Magnetisierspule (31), die von einem Triac (32) geschaltet wird und durch die das zu messende Filmband (1) geführt wird und aus Einrichtungen zur Triac-Ansteuerung (33), in Verbindung mit einem Frequenzteiler (34) mit ungeradzahligem Untersetzungsverhältnis, einem Null-Spannungs-Impulsgeber (35) sowie einer Meßspule (36), durch die das zu messende Filmband (1) geführt wird, einem der Meßspule nachgeschalteten Verstärker (37) mit symmetrischen Eingang, einem Zweiweggleichrichter (38), einem kombinierten digitalen Integrator (39), bestehend aus einem Spannungs-Frequenzwandler mit nachgeschaltetem Zähler, einem Meßwertspeicher (40) und einem Frequenzteiler (41), und daß Anzeigeeinheiten (19, 43) zur digitalen Anzeige der Meßwerte der optisch gemessenen Spurfehler und der Magnetspurquerschnittsmessung, sowie ein Zweikanal-Analogschreiber (21) auf dessen einem Kanal (K 1) die Ergebnisse der optischen Messung und auf dessen anderem Kanal (K 2) die Ergebnisse der magnetischen Messung registriert werden, und Einrichtungen (45 bis 48 und 51), die die Gießeinrichtung (49) nachregeln, einem Alarm oder einen Maschinenstop auslösen, vorhanden sind.

3. Vorrichtung nach Anspruch 2, dadurch gekennzeichnet, daß zwischen dem Objektiv (5) und der Diodenkammera (13) eine Prismenanordnung (6) angebracht ist, die die zu messenden Magnetspuren (2, 3) auf der Diodenkamera (13) direkt nebeneinander abbildet, und der Vergrößerungsmaßstab des Objektives (5) so gewählt ist, daß das Bild der Magnetspuren (2, 3) bei der die größtmögliche Breitenausdehnung des Bildes bewirkenden Abweichung der Magnetspuren (2, 3) von ihrem Sollwert des Target der Diodenkamera (13) ausfüllt.

4. Vorrichtung nach den Ansprüchen 2 und 3, dadurch gekennzeichnet, daß zur Durchführung des Verfahrens für unbelichteten Film (1) die Ausleuchtung des die Spuren tragenden Filmbandes mit Infrarotlicht erfolgt, wobei die Lichtquelle aus einer Halbleiterdiode (11) besteht, die im Brennpunkt des Parabolspiegels (10) angeordnet ist und die gesamte Strahlung über eine Sammellinse (9) auf einen Lichtleiter (8) fokussiert ist, der das gebündelte Infrarotlicht der Diode (11) über einen Querschnittswandler (7) gleichmäßig auf die Magnetspuren (2, 3) auf dem Filmband (1) verteilt.

5. Vorrichtung nach Anspruch 2, dadurch gekennzeichnet, daß die Magnetisierspule (31) mittels des Triac (32) in Verbindung mit dem Frequenzteiler (34), vorzugsweise aus dem 50 hz-Netz, intermittierend mit sinusförmigen Halbwellen gespeist wird und daß die Magnetisierspule (31) das in ihr geführte Magnetspurmaterial mit wechselnder Polarität zur magnetischen Sättigung bringt, wobei der Triac jeweils nahe einem Netzspannungs-Nulldurchgang eingeschaltet und nahe einem Strom-Nulldurchgang ausgeschaltet wird und daß die Meßspule (36) senkrecht und mittensymmetrisch zur Magnetisierspule (31) angeordnet ist.

6. Vorrichtung nach den Anspruchen 2 bis 5, dadurch gekennzeichnet, daß die Meßgrößen aus den optischen und magnetischen Messungen über eine Fehlerverarbeitungsschaltung (44) zur Steuerung und Regelung der Lage, Breite und Dicke der Magnetspuren (2, 3) einem Regler (45) zuführbar sind, der den Gießer (49) in seitlicher Richtung (47) und in seinem Abstand zum Filmband (48) verstellt und der den Druck (46) mit dem das Magnetspurmaterial in den Gießer (49) gepreßt wird, regelt.

## Revendications

1. Procédé pour la mesure et le contrôle continus et sans contact de la largeur, de l'épaisseur et de la position de pistes magnétiques sur des pellicules mobiles et pour la commande de l'opération de coulée pendant le pistage des pellicules, caractérisé par les mesures successives optique de la largeur et de la position des pistes magnétiques (2, 3) et électromagnétique de la section totale magnétiquement active des pistes (q), le dépouillement des valeurs mesurées, leur affichage numérique et leur enregistrement au synchronisme avec le fonctionnement de la machine, puis leur utilisation pour la correction d'un dispositif de coulée, la délivrance de signaux d'alarme ou l'arrêt de la machine d'enduction, selon la nature et la valeur des écarts décelés.

2. Dispositif pour la mise en oeuvre du procédé selon revendication 1, caractérisé par un dispositif de mesure optique de la largeur et de la position des pistes, constitué par un dispositif d'éclairage (7 à 12), qui éclaire la pellicule (1) enduite et guidée par un rouleau de mesure (4), un objectif (5) formant l'image de la partie éclairée de la pellicule (1) sur le cible d'une caméra à diodes (13), un générateur de seuil ajustable (15), un comparateur (16) déterminant la position des impulsions délivrées par la caméra à diodes (13) par rapport aux impulsions délivrées par le générateur de seuil (15), une logique de traduction de défauts (17) et une mémoire de défauts (18); une unité de mesure électromagnétique pour la détermination des valeurs de la section magnétiquement active, constituée par une bobine d'aimantation (31), qui est commutée par un triac (32) et dans laquelle passe la pellicule (1) à mesurer, et des dispositifs de commande (33) du triac, en liaison avec un diviseur de fréquence (34) à rapport impair, un générateur (35) d'impulsions lors du passage de la tension par zéro et une bobine de mesure (36), dans laquelle circule la pellicule (1) à mesurer, un amplificateur à entrée symétrique en aval de la bobine de mesure, un redresseur double alternance (38), un intégrateur numérique combiné (39) constitué par un convertisseur tension-fréquence à compteur en aval, une mémoire de mesure (40) et un diviseur de fréquence (41); et des unités (19, 43) d'affichage numérique des valeurs des défauts de piste mesurés optiquement et de la section mesurée des pistes magnétiques, un enregistreur analogique bivoie (21), dont une voie (K1) énregistre les résultats de la mesure optique et l'autre voie (K2) les résultats de la mesure magnétique, et des dispositifs (45 à 48 et 51), qui corrigent le dispositif de coulée (49), déclenchent une alarme ou un arrêt de la machine.

3. Dispositif selon revendication 2, caractérisé en ce qu'un groupe de prismes (6) est disposé entre l'objectif (5) et la caméra à diodes (13), et forme les images des pistes magnétiques (2, 3) à mesurer côte sur la caméra à diodes (13); et le rapport de grossissement de l'objectif (5) est choisi de façon que l'image des pistes magnétiques (2, 3) couvre la cible de la caméra à diodes (13) pour l'écart des pistes magnétiques (2, 3) par rapport à leur valeur de consigne produisant l'élargissement maximal de l'image.

4. Dispositif selon revendications 2 et 3, caractérisé en ce que, pour la mise en oeuvre du procédé dans le cas d'un film vierge (1), l'éclairage de la pellicule portant les pistes s'effectue en lumière infrarouge, la source lumineuse étant constituée par une diode à semiconducteurs (11), disposée au foyer du miroir parabolique (10) et dont le faisceau total est focalisé par une lentille convergente (9) sur un guide de lumière (8) qui, par l'intermédiaire d'un convertisseur de section (7) répartit la lumière infrarouge focalisée de la diode (11) régulièrement sur les pistes magnétiques (2, 3) de la pellicule (1).

5. Dispositif selon revendication 2, caractérisé en ce que le triac (32), en liaison avec le diviseur de fréquence (34), alimente par intermittence la bobine d'aimantation (31) avec des alternances sinusoïdales, de préférence à partir du réseau 50 Hz; la bobine d'aimantation (31) porte le matériau des pistes magnétiques qui la traverse à la saturation magnétique avec une polarité alternée, le triac étant branché au voisinage d'un passage par zéro de la tension du réseau et coupé au voisinage d'un passage par zéro du courant; et la bobine de mesure (36) est disposée verticalement et symétriquement par rapport au centre de la bobine d'aimantation (31).

6. Dispositif selon revendications 2 à 5, caractérisé en ce que pour la commande et la régulation de la position, de la largeur et de l'épaisseur de piste magnétique (2, 3), un circuit de traitement des défauts (44) applique les valeurs des mesures optique et magnétique à un régulateur (45), qui déplace le verseur 49 latéralement (47), fait varier sa distance à la pellicule (48) et règle la pression (46) de refoulement du matériau des pistes magnétiques dans le verseur (49).

**Claims**

1. A method of contact-free and continuous measurement and monitoring of the width, thickness and position of magnetic tracks on moving film strips and of controlling the casting procedure during the formation of the tracks on the film strips, characterised in that, in succession, the track width and track position of the magnetic tracks (2, 3) are measured optically and the whole magnetically acting track cross-section (q) is measured electromagnetically, the measured values are evaluated, digitally displayed, and recorded synchronously to the running of the machine and depending on the type and magnitude of the deviations discovered, are used for controlling the casting device, for emitting warning signals or for stopping the coating machine.

2. An apparatus for carrying out the method according to Claim 1, characterised in that an optical measuring arrangement is present for measuring the track widths and track positions, which consists of an illuminating arrangement (7 to 12) which illuminates the coated film strip (1) which is guided via a measuring roller (4), an objective lens (5) for projecting the illuminated part of the film strip (1) on to the target of a diode camera (13), an adjustable limiting value transmitter (15), a comparator (16) determining the position of the impulses emitted from the diode camera (13) relative to the impulses produced by the limiting value transmitter (15), a fault evaluating logic (17) and a fault store (18), and in that an electromagnetic measuring unit is used for determining the values of the magnetically acting cross-section, which measuring unit consists of a magnetising coil (31) which is connected by a Triac (32) and through which the film strip (1) to be measured is guided and arrangements for Triac start-up (33) in conjunction with a frequency divider (34) with an odd-numbered step-down ratio, a zero voltage pulse transmitter (35) as well as a measuring coil (36) through which the film strip (1) to be measured is guided, an amplifier (37) connected downstream of the measuring coil with a symmetrical input, a two-path rectifier (38), a combined digital integrator (39) consisting of a voltage frequency transformer with a subsequent counter, a measured value store (40) and a frequency divider (41), and in that display units (19, 43) are present for digitally displaying the measured values of the optically measured track errors and of the magnetic track cross-section measurement, as well as a two-channel analogue recorder (21) on the one channel (K 1) of which the results of the optical measurement and on the other channel of which the results of the magnetic measurement are recorded and devices (45 to 48 and 51) which control the caster (49), trigger an alarm or a mechanical stoppage.

3. An apparatus according to Claim 2, characterised in that a prism arrangement (6) is arranged between the lens (5) and the diode camera (13) which projects the magnetic tracks (2, 3) to be measured directly adjacent to each other on the diode camera (13), and the scale of magnification of the lens (5) is selected so that given a deviation of the magnetic tracks (2, 3) from their desired values which causes the greatest possible widening of the image the image of the magnetic tracks (2, 3) fills the target of the diode camera (13).

4. An apparatus according to Claims 2 and 3, characterised in that for carrying out the method for unexposed film (1), the film strip with the tracks is illuminated with infra-red light, the light source consisting of a semiconductor diode (11) which is mounted at the focal point of a parabolic mirror (10) and all the radiation is focussed via a convex lens (9) on to a light guide (8) which distributes the beam of infra-red light of the diode (11) via a cross-sectional converter (7) uniformly on to the magnetic tracks (2, 3) on the film strip.

5. An apparatus according to Claim 2, characterised in that the magnetising coil (31) is fed intermittently with sinusoidal half waves by means of the Triac (32) in conjunction with the frequency divider (34), preferably from the 50 Hz mains, and in that the magnetising coil (31) brings the magnetic track material of alternating polarity which is fed into it to magnetic saturation, wherein the Triac is connected near the points where the mains voltage passes through zero in each case and is disconnected near the point at which the current passes through zero and in that the measuring coil (36) is arranged perpendicularly to and centrally symmetric about the magnetising coil (31).

6. An apparatus according to Claims 2 to 5, characterised in that the measuring quantities from the optical and magnetic measurements are able to be fed via a fault processor (44) for the control and regulation of the position, width and thickness of the magnetic tracks (2, 3) to a controller (45) which offsets the caster (49) in a lateral direction (47) in its distance to the film strip (48) and which controls the pressure (46) with which the magnetic track material is pressed into the caster (49).

FIG.1a

3  1  2

FIG.1b

2  1  3

FIG.1c

3  1  2  1  3

FIG. 2

FIG. 3

FIG. 3a

FIG. 4

FIG. 5